# EUROPEAN PATENT SPECIFICATION

(11) **EP 1 785 987 B1**
(45) Date of publication and mention of the grant of the patent: **27.07.2011**
(21) Application number: 06300931.0
(22) Date of filing: 06.09.2006
(51) Int. Cl.: G11B 7/0065, G11B 7/007

(54) **Holographic storage medium**
Holografisches Speichermedium
Support holographique de stockage de données

(30) Priority: 13.10.2005 EP 05109542
(43) Date of publication of application: 16.05.2007
(73) Proprietor: Thomson Licensing SA, 92130 Issy-les-Moulineaux (FR)
(72) Inventor: Thies, Stephan, 30519, Hannover (DE)
(74) Representative: Schmidt-Uhlig, Thomas

(56) References cited:
- EP-A- 0 817 201
- WO-A-2004/052002
- WO-A-2005/083689
- US-A- 5 777 760
- US-A1- 2003 128 324
- US-A1- 2003 185 077

## Description

The present invention relates to an holographic storage medium, where data are stored as data pages having a plurality of pixels within a pixel array, and to a device for reading from and/or writing to such a holographic storage medium.

Since the development of the first optical recording medium it has been a superior objective to increase the storage capacity within a recording medium, i.e. to maximize the amount of data that can be stored on a given recording medium, or to minimize the size of the recording medium for a given quantity of information. Today the largest capacities are achieved with digital holographic data storage technology.

In digital holographic data storage the information is recorded in form of interference patterns inside the volume of the recording medium. In the technology of digital holographic storage, the information is arranged in the form of binary data pages, which is usually realized by a modulation of a laser beam using a spatial light modulator (SLM), i.e. an array of light modulating pixels. This laser beam is systematically scanned over the surface of the recording medium, e.g. a rotating holographic disk having a recording layer or a holographic storage card. The increase of the storage density up to 100bits/µm2 is due to the use of the third dimension, i.e. not only a plane surface is used for carrying the information, but a volume in the recording layer.

As indicated before the data are arranged in the form of data pages containing a plurality of bits, e.g. 100 or more bits. Recovered data pages are usually analyzed using a CCD array having the same or a larger number of pixels as the SLM. Due to the high parallelism of data readout, high data transfer rates of up to 10Gbits/s and more are achievable. One problem encountered in holographic recording systems is cross talk from adjacent recorded holograms. The suppression of cross talk between different holograms depends on the field angle. Large cross talk leads to a low signal-to-noise ration (SNR). For example, the shift distance of shift-multiplexed holographic memory systems has to be selected according to the minimum signal to reference beam angle to avoid excessive cross-talk from the corresponding part of the data page. However, this leads to a loss in data density in other parts of the data page, as described by Steckmann et al., Appl. Opt. 40, 3387-3394 (2001). Another example for a position dependent SNR is given by Curtis et al., J. Opt. Soc. Am. A 10 2547-2550 (1993).

'High-transfer-rate high-capacity holographic disk data-storage system' by Orlov et al., Appl. Opt., 43, 4902-4914 (2004) describes the design and implementation of a high-data rate, high capacity digital holographic storage disk system. The data density per hologram is described as the ratio of the number of recorded data pixels divided by the storage location area. The data storage density is affected by different parameters of the system set up and the storing method. The most influencing parameters are the material of the storage medium itself, the material thickness of the storage medium, and the wavelength of the light beam, as smaller focus geometries are achievable for shorter wavelengths. Generally, for high data densities in a digital holographic storage system the amount of SLM-to-CCD pixel misdetection due to imaging distortions and aberrations has to be within very narrow boundaries, e.g. less than 0,2 pixel or better. This detection precision, along with a high numerical aperture (NA), puts stringent requirements on the quality of the imaging optics.

The imaging at large field angles, e.g. by objective systems with a high NA, is not as good as at small field angles. Consequently, the image is affected by optical aberrations, which increase with the increase of the field angle. This causes the SNR to depend on the field angle. From an economic point of view, it would be desirable to use similar plastic components as used for conventional optical data storage systems also for holographic storage systems. As a result, the suppression of cross talk between different adjacent pixels on the CCD depends on the field angle. The pixel size has to be selected according to the maximum permissible cross talk, which is in general determined by the pixels with large field angle. However, this leads to a loss in data density in other parts of the data page. Therefore, the storage capacity of holographic storage systems is limited by the lowest SNR in the image plane.

The limitation of the storage density in holographic storage systems is given in particular by the pixel size in the border area of the data page. The aberrations in the optical elements within the objectives cause distortions in the optical field, and the SNR decreases in the image of the light beam in outer areas. Thus, the achievable density of data storage is limited by the quality of the optical components. This leads to the problem that on the one hand cheap and low quality optical components are not suitable to be used in pickup systems to read out high density data arrays, while on the other hand expensive and high-performance optical components are usually not employed in standard consumer electronics. Therefore, holographic storage media having very high density data arrays are not reliably readable by said standard consumer electronics.

Thus it is an objective of the present invention to provide a holographic storage medium, which achieves a very high density and is at the same time reliably readable by standard consumer electronics.

This object is achieved by a holographic storage medium according to claim 1 in conjunction with the representative features. Advantageous embodiments of the invention are given in the dependent claims.

According to the present invention the data pages in the storage medium feature at least two different data types, whereas a first type of data is stored in an inner part of the data pages and at least a second type of data is stored in an outer part of the data pages, the second type of data being stored with a pixel size equal to or less than the pixel size of the first type of data.

A corresponding method for storing data as data pages on a holographic storage medium has the steps of:
- storing a first type of data in an inner part of the data pages with a first pixel size, and
- storing at least a second type of data in an outer part of the data pages with a second pixel size equal to or less than the first pixel size.

By distinguishing between said two data types, the storage medium features the possibility to store more information on a recording medium that is to be read by high quality devices, but still allows for lower quality devices with a reduced optical performance the playback of data with a limited content. Thus, a multi system holographic recording medium is proposed. This medium is provided with holograms that contain at least two types of data. A first type of data is generated from the inner part of the pixel array, while a second type of data is generated from the outer part of the pixel array. The first type of data is readable and/or writable by devices using high quality optical components as well as devices using low quality optical components. The second type of data is readable and/or writable only by the more expensive high quality devices.

Optical devices with a high performance achieve a high SNR and allow to read out data, which are assigned in the inner as well as in the outer part of the data pages. These devices may be expensive and may be applied in high grade playback electronics or in electronics, which are applied in a professional equipment. Optical devices with a low performance achieve a lower SNR and allow to read out data only from the inner part of the data page corresponding to small field angles. This type of data may carry standard information for playback, limited resolution of a movie or weaker error correction, etc.

Moreover the pixel array may feature a greater size compared to standard sized pixel arrays, whereby the outer area of the data pages is readable by high performance optical devices, whereas the inner part of the data page is at least partly readable by standard optical devices.

Advantageously, a device for reading from and/or writing to a holographic storage medium according to the invention includes means to check the recording quality of the data page, in order to read out only the inner part of the data page or alternatively the inner and the outer part of the data page. By implementing a check of the readability of the first or of the first and the second type of data, the device evaluates if only the first type of data or the first and the second type of data may be replayed. This evaluation may be performed by a special information, which is generated in the second type of data. If the device is able to read out the special information, the device performs playback of the second type of data in addition to the first type of data, and if the device may not read out the special information contained in the second type of data, it can only playback the first type of data.

The distinction between two different types of data leads to the advantage, that the device may include strong error correction means, in order to read out the second type of data in the outer part of the data page. Thus, data storage media, which are only intended for the playback using high preformed optical components, may be differentiated by the error correction means. Systems including weak error correction means are not suitable to read out the data content stored in the outer part of the data page. Devices having low quality optical means perform a distinction between first and second type of data, whereas the second type of data is not detected. Thus, the second type of data does not appear for these devices, which can be understood as "grey areas".

Advantageously the second type of data is encoded using a different error correction method. This error correction algorithm allows for correction of a higher error rate, though it thus results in a lower data rate. In this case even devices with a lower quality detection system may be able to reproduce the second type of data provided they are equipped with decoders for both error correction algorithms. A further advantage is that the overall data rate provided via the first and the second type of data is higher than the one that usually would be reached by only a single type of data area, even if it was larger than the area used according to the invention for the first type of data.

In an advanced embodiment of the invention it is proposed that more than two types of data are recorded, in order to provide a higher number of quality graduations. Alternatively three, four or more quality graduations can be envisaged, in order to extend the number of quality steps, which may be read out by devices with more than two different quality degrees.

In an example not forming part of the present invention, the distinction of at least two different parts within the data pages in the storage medium may be used for the storage of two different movies, whereas the first type of data includes a first movie and the second type of data includes a second movie.
Moreover, high quality devices would allow to play back add-on material in order to give the user an added value such as a sophisticated user interface. Alternatively to a movie data the stored data may include audio data or any different kind of data.

Another feature may be envisaged in the differentiation of the resolution, e.g. in a movie, whereas the first type of data features a standard resolution and the second type of data features a high density resolution. Thus a movie may be read out in two different qualities, whereas the resolution of the data content like a movie is low, when the performance of the device is low, and whereas the resolution is high, when the performance of the device is high. This requires that normal and high density parts of the movie are separated before recording, and that the HD-data playback device is able to combine both parts, whereas regarding the resolution less capacity is required for storing of second type of data.

Another distinction between the two different types of data may be given in a first type of data, which includes most significant data and a second type of data, which includes least significant data. Thus, high quality devices would be able to reproduce highest quality. Low price devices would be able to reproduce acceptable quality, as missing information from second type data is nearly not audible and visible, respectively, by a standard equipment.

Advantageously the first type of data includes encrypted data and the second type of data includes decrypted data. This distinction would allow the producing of recording media, that are playable only on high quality devices. In the case of a mixture of both qualities, high quality devices would give the user an advantage regarding additional movie parts being stored in an encrypted form.

Alternatively the first type of data may feature a weak error correction coding and the second type of data may feature a strong error correction coding. By applying strong and weak error correction coding a reproduction of the second type of data is even possible by low quality devices, as an increase of the error rate in the outer region of the detector array due to a low SNR is compensated by a stronger correction coding. Thus the usable capacity of the recording medium is increased. The different correction coding is applicable for the combination of any of the above mentioned distinction between the at least two types of data.

The foregoing and other aspects will become apparent from the following detailed description of the invention when considered in conjunction with enclosed figures, which show:
- Fig. 1: a schematic illustration of a holographic storage system;
- Fig. 2: a pixel array of a data page, including two different types of data; and
- Fig. 3: a pixel array of a data page, including three different types of data.

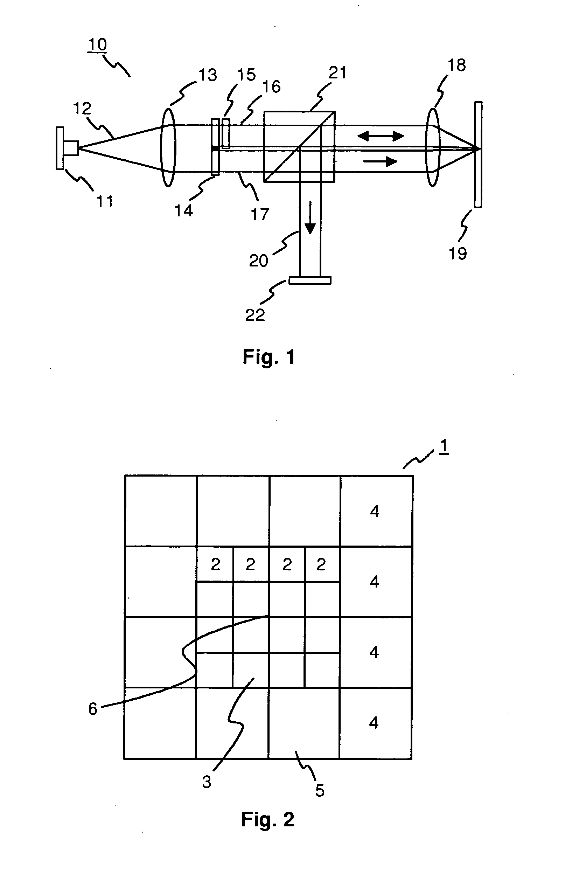

In holographic data storage digital data are stored by recording the interference pattern produced by the superposition of two coherent laser beams. A schematic illustration of a holographic storage system 10 is shown in Fig. 1. A source 11 of coherent light, e.g. a laser diode, emits a light beam 12, which is collimated by a collimating lens 13. The light beam 12 is then divided into two separate light beams 16, 17. In the example the division of the light beam 3 is achieved using a beam splitter 14. However, it is likewise possible to use other optical components for this purpose. A spatial light modulator (SLM) 15 modulates one of the two beams, the so called "object beam" 16, to imprint a 2-dimensional data pattern, i.e. a pixel array. Both the object beam 16 and the further beam, the so called "reference beam" 17, are focused into a holographic recording medium 19, e.g. a holographic disk, by an objective lens 18. At the intersection of the object beam 16 and the reference beam 17 an interference pattern appears, which is recorded in a photo-sensitive layer of the holographic recording medium 19.

The stored data are retrieved from the holographic recording medium 19 by illuminating a recorded hologram with the reference beam 17 only. The reference beam 17 is diffracted by the hologram structure and produces a copy of the original object beam 16, the reconstructed object beam 20. This reconstructed object beam 20 is collimated by the objective lens 18 and directed onto a 2-dimensional array detector 22, e.g. a CCD-array, by a further beam splitter 21. The array detector 22 allows to reconstruct the recorded data.

Fig. 2 shows a schematic view of a pixel array 1 of a data page, which features an inner part 3 and an outer part 5 surrounding the inner part 3. In this example the pixel array 1 is made of a square shape. The outer part 5 corresponds to a high field angle of a reading and/or writing device, while the inner part of the pixel array 1 corresponds to a low field angle. The optical axis of the whole pick up system falls into the center 6. Within the inner part 3 a first type of data 2 is stored, whereas in the outer part 5 a second type of data 4 is stored. The inner and outer parts 3,5 of the data page are indicated as square fields, in order to illustrate the position of the data areas. Although the square fields for first type of data 2 and second type of data 4 are shown as having different size, they may well have the same size as the inventive distinction allows high quality devices to also access outer parts 5, that are not of increased size compared to the inner part 3. Even a smaller size for the fields of the outer part 5 is possible here.

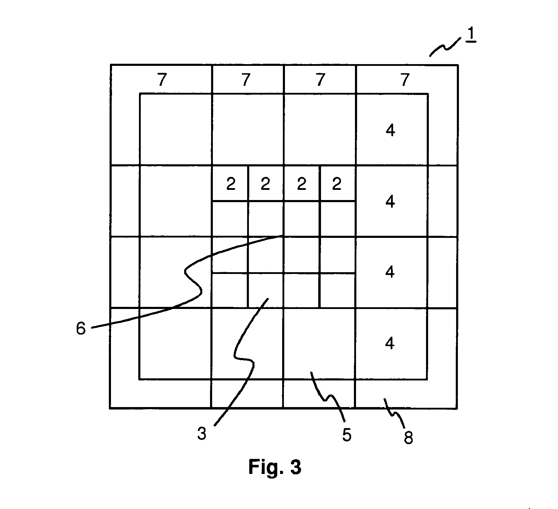

Fig. 3 depicts a schematic view of a pixel array 1, which features a third type of data 7 located in an additional part 8 surrounding the outer part 5 of the pixel array 1 in Fig. 1.

The pixel array 1 has a greater size compared to standard sized pixel arrays 1. The outer area of the data page is only readable by very high performance optical devices, whereas the inner part 3 and the outer part 5 -to be regarded as a medium part in the embodiment of Fig. 2- of the pixel array 1 is at least partly readable by standard optical devices. The additional part 8 requires very high performed optical devices to read out the third type of data 7.

The present invention is not limited by the embodiment described above, which is represented as an example only and can be modified in various ways within the scope of protection defined by the accompanying patent claims. Thus the invention is also applicable to different holographic data storage systems.

### Reference Numerals

- 1: pixel array
- 2: first type of data
- 3: inner part
- 4: second type of data
- 5: outer part
- 6: center
- 7: third type of data
- 8: additional part
- 10: holographic storage system
- 11: light source
- 12: light beam
- 13: collimating lens
- 14: beam splitter
- 15: spatial light modulator
- 16: object beam
- 17: reference beam
- 18: objective lens
- 19: holographic recording medium
- 20: reconstructed object beam
- 21: beam splitter
- 2: array detector

## Claims

1. Holographic storage medium, where data are stored as one or more data pages having a plurality of pixels within a pixel array (1), wherein the data pages feature at least two different data types, **characterised in that** a first type of data (2) is stored in an inner part (3) of the data pages and is required for standard quality rendition, and whereas at least a second type of data (4) is stored in an outer part (5) of the data pages and is required in combination with the first type of data for high quality rendition, the second type of data (4) being stored with a pixel size equal to or larger than the pixel size of the first type of data (2).

2. Holographic storage medium according to claim 1, wherein the first type of data (2) includes encrypted data and the second type of data (4) includes decrypted data.

3. Holographic storage medium according to one of the previous claims, wherein the first type of data (2) is coded with a weak error correction coding and the second type of data (4) is coded with a strong error correction coding.

4. Device for reading from and/or writing to a holographic storage medium according to one of claims 1 to 3, **including** at least one pickup for reading from and/or writing to a holographic storage medium (19), whereas the pickup has high quality optical means capable of reading and/or writing both a first type of data (2) in an inner part (3) of a data page, the first type of data being required for standard quality rendition, and the second type of data (4) in an outer part (5) of the data page, the second type of data being required in combination with the first type of data for high quality rendition, the second type of data (4) being stored with a pixel size equal to or larger than the pixel size of the first type of data (2).

5. Device according to claim 4, **having** strong error correction means, in order to read out the second type of data (4) in the outer part (5) of the data page.

6. Device according to one of claims 4 or 5, having means to check the recording quality of the data page, in order to read out only the inner part (3) of the data page or alternatively the inner and the outer part (3,5) of the data page.

7. Method for storing data as data pages on a holographic storage medium, having the steps of:
- storing a first type of data (2) in an inner part (3) of the data pages with a first pixel size, the first type of data being required for standard quality rendition, and
- storing at least a second type of data (4) in an outer part (5) of the data pages with a second pixel size equal to or larger than the first pixel size, the second type of data being required in combination with the first type of data for high quality rendition.

## Patentansprüche

1. Holographisches Speichermedium, bei dem Daten als eine oder mehrere Datenseiten mit mehreren Pixeln innerhalb einer Pixelanordnung (1) gespeichert sind, **bei dem** die Datenseiten mindestens zwei unterschiedlichen Datentypen aufweisen, **dadurch gekennzeichnet, dass** ein erster Typ von Daten (2) in einem inneren Teil (3) der Datenseiten gespeichert ist und für die Wiedergabe in Standardqualität erforderlich ist, und dass mindestens ein zweiter Typ von Daten (4) in einem Außenteil (5) der Datenseiten gespeichert ist und gemeinsam mit dem ersten Typ von Daten für eine Wiedergabe mit hoher Qualität erforderlich ist, wobei der zweite Typ von Daten (4) mit einer Pixelgröße gleich der oder größer als die Pixelgröße des ersten Typs von Daten (2) gespeichert ist.

2. Holographisches Speichermedium nach Anspruch 1, **bei dem** der erste Typ von Daten (2) verschlüsselte Daten enthält und der zweite Typ von Daten (4) entschlüsselte Daten enthält.

3. Holographisches Speichermedium nach einem der vorhergehenden Ansprüche, **bei dem** der erste Typ von Daten (2) mit einer schwachen Fehlerkorrekturcodierung codiert ist und der zweite Typ von Daten (4) mit einer starken Fehlerkorrekturcodierung codiert ist.

4. Vorrichtung zum Lesen von und/oder zum Schreiben auf ein holographisches Speichermedium nach einem der Ansprüche 1 bis 3, wobei die Vorrichtung **enthält**: mindestens einen Abnehmer zum Lesen von und/oder zum Schreiben auf ein holographisches Speichermedium (19), wobei der Abnehmer ein optisches Mittel hoher Qualität aufweist, das sowohl einen ersten Typ von Daten (2) in einem inneren Teil (3) einer Datenseite, wobei der erste Typ von Daten für die Wiedergabe in Standardqualität erforderlich ist, als auch den zweiten Typ von Daten (4) in einem äußeren Teil (5) der Datenseite, wobei der zweite Typ von Daten gemeinsam mit dem ersten Typ von Daten für die Wiedergabe in hoher Qualität erforderlich ist, lesen und/oder schreiben kann, wobei der zweite Typ von Daten (4) mit einer Pixelgröße gleich der oder größer als die Pixelgröße des ersten Typs von Daten (2) gespeichert ist.

5. Vorrichtung nach Anspruch 4, die **aufweist**: ein Mittel für die starke Fehlerkorrektur zum Auslesen des zweiten Typs von Daten (4) in dem äußeren Teil (5) der Datenseite.

6. Vorrichtung nach einem der Ansprüche 4 oder 5, die **aufweist**: ein Mittel zum Prüfen der Aufzeichnungsqualität der Datenseite, um nur den inneren Teil (3) der Datenseite oder alternativ den inneren und den äußeren Teil (3, 5) der Datenseite auszulesen.

7. Verfahren zum Speichern von Daten als Datenseiten auf einem holographischen Speichermedium, wobei das Verfahren die folgenden Schritte **aufweist**:
- Speichern eines ersten Typs von Daten (2) in einem inneren Teil (3) der Datenseiten mit einer ersten Pixelgröße, wobei der erste Typ von Daten für die Wiedergabe in Standardqualität erforderlich ist, und
- Speichern mindestens eines zweiten Typs von Daten (4) in einem äußeren Teil (5) der Datenseiten mit einer zweiten Pixelgröße, die gleich der oder größer als die erste Pixelgröße ist, wobei der zweite Typ von Daten gemeinsam mit dem ersten Typ von Daten für die Wiedergabe in hoher Qualität erforderlich ist.

## Revendications

1. Support holographique de stockage de données, où les données sont stockées comme une ou plusieurs pages de données comprenant une pluralité de pixels dans un ensemble de pixels (1), dans lequel les pages de données représentent au moins deux types de données différents, **caractérisés en ce qu'**un premier type de données (2) est stocké dans une partie intérieure (3) des pages de données et est requis pour un rendu de qualité standard, et tandis qu'au moins un second type de données (4) est stocké dans une partie extérieure (5) des pages de données et est requis en combinaison avec le premier type de données pour un rendu de qualité élevée, le second type de données (4) étant stocké avec une taille de pixel égale ou supérieure à la taille de pixel du premier type de données (2).

2. Support holographique de stockage de données selon la revendication 1, dans lequel le premier type de données (2) inclut des données cryptées et le second type de données inclut des données décryptées.

3. Support holographique de stockage de données selon l'une des revendications précédentes, dans lequel le premier type de données (2) est codé avec un codage correcteur d'erreurs faibles et le second type de stockage de données (4) est codé avec un codage correcteur d'erreurs fortes.

4. Dispositif permettant de lire et/ou d'écrire sur un support holographique de stockage selon l'une des revendications 1 à 3, incluant au moins un capteur pour la lecture et/ou l'écriture sur un support holographique de stockage (19), tandis que le capteur est pourvu d'un moyen optique de qualité élevée capable de lire et/ou d'écrire à la fois le premier type de données (2) d'une partie intérieure (3) d'une page de données, le premier type de données étant requis pour un rendu de qualité standard, et le second type de données (4) d'une partie extérieure (5) de la page de données, le second type de données étant requis en combinaison avec le premier type de données pour un rendu de qualité élevée, le second type de données (4) étant stocké avec une taille de pixel supérieure ou égale à la taille de pixel du premier type de données (2).

5. Dispositif selon la revendication 4, pourvu d'un moyen de correction d'erreurs fortes, permettant de lire le second type de données (4) dans la partie extérieure (5) de la page de données.

6. Dispositif selon l'une des revendications 4 à 5, pourvu d'un moyen pour vérifier la qualité d'enregistrement de la page de données, permettant de lire uniquement la partie intérieure (3) de la page de données ou, alternativement, les parties intérieure et extérieure (3, 5) de la page de données

7. Procédé permettant de stocker les données sous forme de pages de données sur un support holographique de stockage, présentant les étapes suivantes :
- enregistrement d'un premier type de données (2) dans une partie intérieure (3) des pages de données avec une première taille de pixel, le premier type de données étant requis pour un rendu de qualité standard, et
- enregistrement d'au moins un second type de données (4) dans une partie extérieure (5) des pages de données avec une seconde taille de pixel supérieure ou égale à la première taille de pixel, le second type de données étant requis en combinaison avec le premier type de données pour un rendu de qualité élevée.
